# DEMANDE DE BREVET EUROPEEN

(11) **EP 0 624 556 A1**
(43) Date de publication de la demande: **17.11.1994**
(21) Numéro de dépôt: 93401250.1
(22) Date de dépôt: 14.05.1993
(51) Int. Cl.: C03B 5/235, C03B 5/04, C03B 3/00, B09B 3/00

(54) **Installation de vitrification de déchets**

(71) Demandeur: G.T.I. ENVIRONNEMENT SA, F-75008 Paris (FR)
(72) Inventeur: Trepaud, Pierre, F-75017 Paris (FR)
(74) Mandataire: Bourgognon, Jean-Marie

(57) **Abrégé**

Le four communique avec une enceinte (6) de réception d'un bain maitenu à l'état fondu par la flamme d'un brûleur (8) alimenté en fluide combustible et en gaz comburant, un dispositif de préchauffage (3, 22) du gaz comburant étant prévu en amont du brûleur (8). Vitrification de déchets industriels et domestiques.

## Description

L'invention se rapporte aux installations de vitrification de déchets, comportant notamment des proportions importantes de produits difficiles à détruire par simple combustion.

Il reste ainsi des résidus contenant des imbrûlés souvent dangereux ou qui nécessitent du moins un stockage dans des conditions de sécurité dit de classe I.

Une solution pour supprimer tout imbrûlé consiste à monter les cendres en température jusqu'à les fondre et à les vitrifier, ce qui rend les résidus de la combustion complètement inertes. Mais il faut pour cela atteindre des températures élevées et dépenser beaucoup d'énergie.

L'invention pallie ces inconvénients en permettant de porter les déchets industriels ou domestiques aux températures nécessaires pour qu'il ne reste plus d'imbrûlés, tout en dépensant aussi peu d'énergie que possible, à l'aide d'une installation ne mettant en oeuvre que des brûleurs et dispositifs de chauffage très classiques et d'un fonctionnement simple et éprouvé, sans même qu'il soit nécessaire de disposer d'une source d'électricité.

L'installation de vitrification de déchets suivant l'invention, qui comprend un four, est caractérisée en ce que le four communique par une sortie avec une enceinte disposée en contrebas et destinée à la réception d'un bain maintenu à l'état fondu, par la flamme d'un brûleur alimenté en fluide combustible et en gaz comburant, un dispositif de préchauffage du gaz comburant étant prévu en amont du brùleur.

Grâce au prêchauffage du gaz comburant, qui est notamment de l'air, la flamme d'un brùleur alimenté en fluide combustible rayonne suffisamment de chaleur pour maintenir à une température d'au moins 1500°C le bain de l'enceinte. La chaleur emmagasinée dans ce bain est transmise par conduction, d'une manière très efficace, aux déchets qui y tombent. La masse calorifique du bain et l'inertie du four, puisque l'on opère par rayonnement, permettent d'amortir les différences de quantités de chaleur nécessitées par la composition et par l'arrivée variable de déchets dans le bain. En outre, ce bain présente une surface relativement grande, à laquelle la chaleur rayonnée par le brûleur est transmise d'une manière très efficace, notamment lorsque celui-ci est disposé de façon que sa flamme s'étende à proximité de la surface du bain.

Comme fluide combustible, on peut utiliser notamment du gaz de raffinerie, du gaz naturel, des hydrocarbures comme le méthane, le propane et le butane, du gaz de ville, du gaz de cokerie, ou un liquide combustible pulvérisé tell que du kérosène, du fioul, de l'essence et, avantageusement un déchet combustible liquide ou gazeux.

Suivant un mode de réalisation préféré, le dispositif de préchauffage comprend un brûleur auxiliaire alimenté en fluide combustible, les deux brûleurs pouvant être alimentés par un même réservoir de fluide combustible.

Suivant un autre mode de réalisation, le four comporte une zone de dégagement des fumées et le dispositif de préchauffage comprend un échangeur de chaleur monté dans la zone de dégagement des fumées et parcouru par le gaz carburant envoyé au brûleur. Les fumées servent ainsi à chauffer le gaz comburant avant de l'envoyer au brûleur.

Pour que l'installation fonctionne automatiquement, il est en outre prévu, de préférence, que le bain déborde par un trop-plein dans un bassin d'eau. La quantité du bain est ainsi limitée automatiquement. Pour éviter toute solidification du bain à proximité du trop-plein, le brûleur est disposé plus près du trop-plein que du four. Le trop-plein sert aussi d'obstacle, de sorte que les déchets ne passent pas directement dans le bassin.

Pour maintenir plus facilement le bain à l'état fondu, on préfère la plus grande dimension de l'enceinte soit horizontale et soit supérieure au double de sa hauteur et que le brûleur soit monté à l'une des extrémités de l'enceinte. On préfère aussi que la profondeur du bain soit inférieure à 15 cm. Pour perdre le moins possible de l'énergie rayonnée par le brûleur, la sortie du four débouche dans la partie supérieure de l'enceinte et a une longueur, décomptée parallèlement à l'axe, inférieure au 1/5 de la longueur de l'enceinte, et notamment inférieure au 1/10 de celle-ci.

Suivant un mode de réalisation préféré, une sonde repère la température du bain et est reliée à un circuit de commande de l'alimentation en gaz comburant du dispositif de préchauffage et/ou de l'alimentation en gaz combustible du brûleur de manière à commander cette alimentation en fonction de cette température.

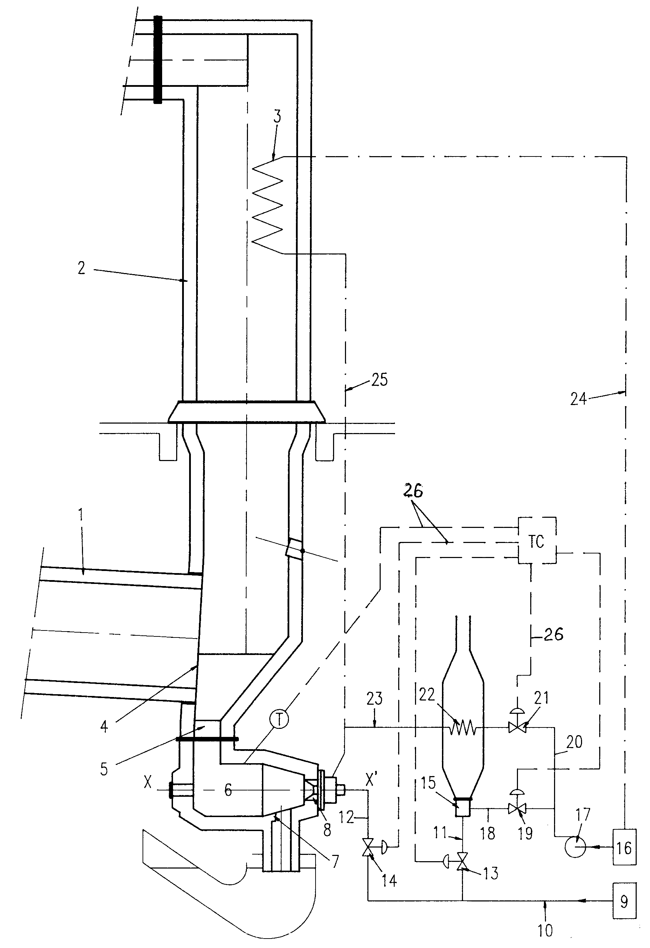

La figure unique du dessin annexé illustre l'invention.

Le four fixe est constitué d'une carcasse 1 en matériau réfractaire comprenant une zone de chargement constituée d'un sas et munie d'un poussoir, non représenté, permettant d'introduire des déchets. Des buses d'injection d'air, non représentées, ainsi qu'un brûleur d'allumage non représenté, permettent de faire brûler les déchets. Les fumées provenant de la combustion traversent, après passage dans une zone de post-combustion (non représentée), une zone 2 de dégagement des fumées, dans laquelle est monté un échangeur de chaleur 3. Les cendres et imbrûlés tombent, par une sortie 4 et en passant par une lucarne 5, dans une enceinte 6 d'axe X-X horizontal. Cette enceinte contient dans sa partie basse un bain 6 et est munie, du côté opposé à la lucarne 5, d'un trop-plein 7. A l'extrémité de l'axe X-X' se trouvant du côté du trop-plein 7, est monté un brûleur 8 à fluide combustible. Le brûleur 8 est sur l'axe X-X', mais on pourrait également en monter deux disposés symétriquement par rapport à cet axe. Ce brûleur est alimenté en fluide combustible à partir d'une source 9 par un conduit principal 10 qui se subdivise en deux conduits secondaires 11 et 12 munis de vannes 13 et 14. Le conduit 10 et le conduit 12 mènent directement au brûleur 8, tandis que par le conduit 11 on peut envoyer du fluide combustible dans un brûleur auxiliaire 15. De l'air issu d'une source 16 est envoyé, par un compresseur 17, d'une part par un conduit 18 ayant une vanne 19, au brûleur 15 auxiliaire et, d'autre part par un conduit 20 ayant une vanne 21, dans un échangeur de chaleur 22 où l'air est chauffé par la flamme du brûleur 15. Le conduit 23 de sorti de l'échangeur de chaleur 22 débouche dans le brûleur 8.

On peut ainsi alimenter le brûleur 8, à la fois en fluide combustible et en air préchauffé.

Une autre façon de préchauffer l'air consiste à l'envoyer par un conduit 24 dans l'échangeur de chaleur 3 et, de celui-ci, au brûleur 8 par un conduit 25.

La lucarne 5 débouche dans la partie supérieure de l'enceinte 6 et a une longueur, dêcomptée parallèlement à l'axe X-X', inférieure du 1/5 de la longueur de l'enceinte 6.

Une sonde T repère la température dans l'enceinte 6 ou du bain et par un circuit 26 et un dispositif de commande TC commande les vannes 13, 14 et 21 en fonction de la température régnant dans l'enceinte 6 ou de cette température.

## Revendications

1. Installation de vitrification de déchets, comprenant un four (1), caractérisée en ce que le four (1) communique par une sortie (4) avec une enceinte (6) disposée en contrebas et destinée à la réception d'un bain maintenu à l'état fondu par la flamme d'un brûleur (8) alimenté en fluide combustible et en gaz comburant, un dispositif de préchauffage (3, 22) du gaz comburant étant prévu en amont du brûleur (8).

2. Installation suivant la revendication 1, caractérisée en ce que le dispositif de préchauffage comprend un brûleur auxiliaire (15) alimenté en fluide combustible.

3. Installation suivant la revendication 2, caractérisée en ce que les deux brûleurs (8, 15) sont alimentés par un méme réservoir (9) de fluide combustible.

4. Installation suivant la revendication 1, dont le four (1) comporte une zone (2) de dégagement des fumées, caractérisée en ce que le dispositif de préchauffage comprend un échangeur de chaleur (3) monté dans la zone (2) de dégagement des fumées et parcouru par le gaz comburant envoyé au brûleur.

5. Installation suivant l'une des revendications 1 à 4, caractérisée par un trop-plein (7) de débordement du bain.

6. Installation suivant la revendication 5, caractérisée en ce que le trop-plein (7) est plus près du brûleur (8) que de la sortie (4) du four.

7. Installation suivant l'une des revendications 1 à 6, caractérisée en ce que la plus grande dimension de l'enceinte est horizontale et est supérieure du double de sa hauteur et le brûleur (8) est monté à l'une des extrémités de l'enceinte, la profondeur du bain étant de préférence inférieure à 15 cm.

8. Installation suivant l'une des revendications précédentes, caractérisée en ce que la sortie (4) débouche dans la partie supérieure de l'enceinte (6) et a une longueur décomptée parallèlement à l'axe (X-X') inférieure au 1/5 de la longueur de l'enceinte (6).

9. Installation suivant l'une des revendications précédentes, caractérisée en ce que le brûleur (8) est alimenté par une source (9) de déchet combustible.

10. Installation suivant l'une des revendications précédentes, caractérisée par une sonde (T) de température repérant la température du bain ou la température dans l'enceinte (6) et par un circuit de commande (TC) relié à la sonde (T) et destiné à commander l'alimentation en gaz comburant du dispositif de préchauffage (3, 22) et/ou l'alimentation en gaz combustible du brûleur (8) en fonction de la température repérée par la sonde (T).
